Europäisches Patentamt

European Patent Office

Office européen des brevets

(19)

(11) Veröffentlichungsnummer : **0 052 262**
**B1**

(12) **EUROPÄISCHE PATENTSCHRIFT**

(45) Veröffentlichungstag der Patentschrift :
28.08.85

(51) Int. Cl.⁴ : **B 32 B 27/08**

(21) Anmeldenummer : **81108916.8**

(22) Anmeldetag : **26.10.81**

(54) **Siegelfähige, biaxial gestreckte Polypropylenfolie mit hoher Kratzfestigkeit sowie Verfahren zu ihrer Herstellung.**

(30) Priorität : **03.11.80 DE 3041286**

(43) Veröffentlichungstag der Anmeldung :
**26.05.82 Patentblatt 82/21**

(45) Bekanntmachung des Hinweises auf die Patenterteilung : **28.08.85 Patentblatt 85/35**

(84) Benannte Vertragsstaaten :
**BE DE FR GB IT NL**

(56) Entgegenhaltungen :
**DE-A- 2 208 619**
**DE-A- 2 637 978**
**DE-B- 1 294 005**
**GB-A-   941 898**
**GB-A-   992 930**
**Kunststoff-Handbuch, Band IV - Polyolefine, Seiten 307,308**
**Encyclopedia of Polymer Science and Technology, vol. 6, Seite 299**

(73) Patentinhaber : **HOECHST AKTIENGESELLSCHAFT**
**Postfach 80 03 20**
**D-6230 Frankfurt am Main 80 (DE)**

(72) Erfinder : **Stegmeier, Gerhard, Dr.**
**Hindemithstrasse 39**
**D-6500 Mainz (DE)**
Erfinder : **Janocha, Siegfried, Dr.**
**Am Hohen Stein 6**
**D-6200 Wiesbaden (DE)**
Erfinder : **Hensel, Hartmut, Dr.**
**Am Rosenberg 2**
**D-6229 Schlangenbad 3 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine mit Polyäthylen beschichtete, biaxial gestreckte Polypropylenfolie, die sich sowohl schnell siegeln läßt, äußerst kratzresistent ist und eine gute Transparenz aufweist.

Die Erfindung betrifft auch ein Verfahren zur Herstellung der Folie.

Aus dem Stand der Technik sind mit Polyäthylen beschichtete, mono- oder biaxial gestreckte Polypropylenfolien bekannt. Die Polyäthylenschichten können auf die Polypropylenschicht auf unterschiedliche Weise aufgebracht werden.

So ist in der DE-AS 12 94 005 eine ein- oder beidseitige Laminierung von Polypropylenfolien mit Polyäthylenfolien mit anschließender Streckung beschrieben. Die GB-PS 941 898 befaßt sich mit der Herstellung von Verbundschläuchen aus Polyäthylen und Polypropylen, wobei die Schichten coextrudiert werden und der so hergestellte Verbund anschließend in Längsrichtung gestreckt wird. Hierbei wird angegeben, daß das Polyäthylen eine Dichte von $\leq 0,93$ g/cm$^3$ besitzen soll. Solche zum Stand der Technik zu rechnenden Folien werden seit geraumer Zeit vorzugsweise im Verpackungssektor, z. B. zum Herstellen von Verpackungen für feste Güter, u. a. Nahrungsmittel, wie z. B. Teigwaren, Reis u. a., oder als Einschlag für Kartonagenverpackungen benutzt. Alle bisher bekannten und auf dem Markt befindlichen Folien haben jedoch den Nachteil einer relativ hohen Kratzempfindlichkeit, bedingt durch das als Siegelschicht verwendete Polyäthylen.

So zerkratzen z. B. harte Lebensmittel, wie z. B. Teigwaren, Reis u. a. die Innenseite der Verpackung beispielsweise beim Transport und/oder bereits beim Abfüllen. Auch kann es bereits bei der Herstellung der Verpackung und/oder innerhalb von später verwendeten Verpackungsstraßen infolge Reibung der Folie an den Maschinenteilen zu Aufrauhungen und/oder Kratzern kommen, wenn Folien nach dem Stand der Technik Verwendung finden. Solche Aufrauhungen und/oder Kratzer führen zu einer Trübung und einer Verminderung des Glanzes der Folie, die sowohl vom Hersteller der Verpackung als auch vom Verpacker und dem Endverbraucher nicht akzeptiert werden.

Es stellte sich somit die Aufgabe, eine Polyäthylen-Polypropylen-Verbundfolie, bevorzugt als Flachfolie, zu schaffen, die — wegen der heute sehr hohen Maschinenlaufgeschwindigkeiten bei der Herstellung der Verpackung und innerhalb von Verpackungs- und Einschlagstraßen — schnell siegelbar ist, eine hohe Kratzfestigkeit und gute Maschinengängigkeit aufweist und die — im Hinblick auf das optische Aussehen — eine hohe Transparenz besitzt.

Gelöst wird die vorstehend genannte Aufgabe durch eine siegelfähige, biaxial gestreckte Polypropylenfolie mit einer wenigstens einseitig aufgebrachten Schicht aus Polyäthylen, die dadurch gekennzeichnet ist, daß die Polyäthylenschicht eine Kratzfestigkeit von $\leq 50$ % Glanzverlust, bezogen auf einen Ausgangsglanz von 100 %, gemessen nach ASTM-Norm D 673-70, und eine Dichte von $\geq 0,94$ g/cm$^3$, bevorzugt von $\geq 0,95$ g/cm$^3$, aufweist. Die Messung nach der ASTM-Norm D 673-70 (1976) ist auf einen 60°-Winkel und die Verwendung von 0,2 kg Siliziumcarbid Nr. 80 bezogen.

Unter den für die Herstellung der Folien verwendeten Polypropylenen sind auch solche Rohstoffe zu verstehen, die in untergeordnetem Maße auch mit anderen Olefinen, wie z. B. Äthylen und/oder Buten copolymerisiert sind. Unter den für die Siegelschicht brauchbaren Äthylenen sind auch solche miteingeschlossen, die ebenfalls in untergeordnetem Maße ein oder mehrere Comonomere enthalten.

Beide Rohstoffe können Additive, wie z. B. Antistatika, Antiblock- und Schlupfmittel, Farbstoffe, Pigmente u. a. enthalten, wodurch die Oberflächeneigenschaften entsprechend dem gewünschten Verwendungszweck modifizierbar sind.

Die Schichtstärke der Polyäthylenschicht(en) liegt unter 2 μm, bevorzugt unter 1 μm, da bei höheren Schichtstärken der Verbund infolge des an sich trüberen Polyäthylens an Transparenz verliert.

Die Verbundfolie wird bevorzugt durch Coextrusion hergestellt, jedoch ist es auch möglich, sie durch Heißlaminieren oder durch Schmelzbeschichtung zu erzeugen. Die Schmelzbeschichtung mit Polyäthylen kann dabei auf eine nicht verstreckte, uniaxial oder biaxial gestreckte Polypropylenfolie vorgenommen werden. Hierbei ist jedoch bevorzugt, daß das Aufbringen des Polyäthylens nach der Längsverstreckung und vor der Querverstreckung der Polypropylenfolie vorgenommen wird.

Zur Verbesserung der Haftung gegenüber Druckfarben kann der fertiggestellte Verbund auch noch auf einer oder beiden Seiten einer allgemein bekannten Coronabehandlung unterworfen werden.

Das Verfahren zur Herstellung der Folie besteht darin, daß man innerhalb der vorstehend genannten und an sich bekannten Verfahren die heiße Polyäthylenschicht(en) sofort nach dem Verbinden mit der Polypropylenschicht abschreckt. Das Abschrecken erfolgt dabei vorzugsweise mittels eines Gasstromes und/oder eines Kühlbades. Bevorzugt wird die Abschreckung derart vorgenommen, daß sich die Temperatur der Polyäthylenschicht(en) auf $\leq 70$ °C einstellt.

Bei einem zur Herstellung der Folie angewendeten Coextrusionsverfahren liegen z. B. die Prozeßparameter bei folgenden Werten :

| | |
|---|---|
| Schmelzetemperatur Polypropylen | 240 bis 280 °C |
| Schmelzetemperatur Polyäthylen | 230 bis 250 °C |
| Kühlwalze | 30 bis 35 °C |
| Strecktemperatur längs | 120 bis 140 °C |

2

| | |
|---|---|
| Strecktemperatur quer | 160 bis 170 °C |
| Streckverhältnis längs | 4,5 bis 6,5 |
| Streckverhältnis quer | 8 bis 12 |
| Thermofixierung | 150 bis 160 °C |

Die Erfindung soll nunmehr anhand der folgenden Beispiele nochmals näher erläutert werden, ohne daß jedoch eine Einschränkung hierauf bestehen soll.

## Beispiel 1

Durch Coextrusion wurde eine Zweischichtfolie hergestellt. Für die Basisschicht wurde ein isotaktisches Polypropylen mit einer Dichte von 0,91 g/cm³, für die Siegelschicht ein Polyäthylen mit einer Dichte von 0,965 g/cm³ in getrennten Extrudern bei 250 °C bzw. 240 °C aufgeschmolzen und durch eine Zweischichtbreitschlitzdüse extrudiert. Der so hergestellte Verbund wurde auf der Polyäthylenseite mittels eines Luftmessers auf eine Temperatur von 66 °C abgeschreckt. Der Verbund wurde anschließend mittels Walzen bei einer Temperatur von 138 °C längsgestreckt mit einem Streckverhältnis von 6,0. Die anschließende Querstreckung mit einem Streckverhältnis von 10 wurde bei einer Temperatur von 168 °C durchgeführt. Die Thermofixierung wurde bei 160 °C vorgenommen.

## Beispiel 2

Beispiel 1 wurde wiederholt mit folgenden Unterschieden :
Verwendung von Polyäthylen mit einer Dichte

| | |
|---|---|
| Von | 0,952 g/cm³ |
| Schmelzetemperatur Polyäthylen | 235 °C |
| Längsstrecktemperatur | 140 °C |
| Querstrecktemperatur | 173 °C |

## Beispiel 3

Beispiel 1 wurde wiederholt mit dem Unterschied, daß für die Siegelschicht ein Copolymerisat aus 95,2 % Äthylen und 4,8 % Propylen verwendet wurde.

Die Stärke der Basissfolie aus Polypropylen betrug in allen Beispielen 35 μm, die der Polyäthylenschicht jeweils 1 μm.

Die erfindungsspezifischen Meßwerte für die hergestellten Folien im Vergleich zu einer Folie nach dem Stand der Technik sind in der folgenden Tabelle aufgeführt. Die Meßwerte wurden wie folgt ermittelt :

## Kratzfestigkeit

Nach ASTM D 673-70 (1976) unter Vewendung von 0,2 kg Siliziumcarbid Nr. 80 bei einem 60°-Winkel.

## Siegelfestigkeit

Zwei 15 mm breite Streifen wurden übereinandergelegt und bei 130 °C, einer Siegelzeit von 0,1 s und einem Siegeldruck von 0,15 bar versiegelt. Die Siegelfestigkeit wurde nach der T-Peel-Methode bestimmt.

## Maschinengängigkeit

Die Maschinengängigkeit wurde an einer Einschlagmaschine für Kleinkartonagen getestet. Wenn sich über 2 000 m Lauflänge keine Laufprobleme ergaben, wurde die Folie als gut eingestuft.

## Trübung

Die Trübung wurde mittels eines Trübungsmeßgerätes (Eigenbau der Anmelderin auf der Basis einer Ulbrichtkugel mit einem erfaßten Raumwinkel der Vorwärtsstreuung von 166° und einem vom Gerät ausgeblendeten Winkel von 0,8°) an vier übereinandergelegten Lagen der Folie gemessen.

(Siehe Tabelle Seite 4)

Tabelle

| | Beispiele | | | Folie nach |
| --- | --- | --- | --- | --- |
| | 1 | 2 | 3 | dem Stand der Technik |
| Glanzverschlechterung % (Kratzfestigkeit) | 28 | 35 | 30 | 71 |
| Siegelfestigkeit N/15 mm | 1,0 | 1,4 | 0,9 | 0,8 |
| Maschinengängigkeit | gut | gut | gut | gut |
| Trübung | 18 | 25 | 20 | 35 |

Wie die Tabelle ausweist, sind die Werte für die Siegelfestigkeit und die Maschinengängigkeit der Folie nach dem Stand der Technik akzeptabel. Der Wert für die Trübung ist gerade an der Grenze der annehmbaren Trübung. Die Vergleichszahlen für die Kratzfestigkeit zeigen jedoch die erhebliche Überlegenheit der erfindungsgemäßen Folie.


**Patentansprüche**

1. Siegelfähige, biaxial gestreckte Polypropylenfolie mit einer wenigstens einseitig aufgebrachten Schicht aus Polyäthylen, dadurch gekennzeichnet, daß die Polyäthylenschicht eine Kratzfestigkeit von $\leqslant 50\%$ Glanzverlust, bezogen auf einen Ausgangsglanz von 100 %, gemessen nach ASTM-Norm D 673-70(1976), und eine Dichte von $\geqslant 0,94$ g/cm$^3$, bevorzugt $\geqslant 0,95$ g/cm$^3$, aufweist.

2. Folie nach Anspruch 1, dadurch gekennzeichnet, daß die Polyäthylenschicht(en) eine Kratzfestigkeit $\leqslant 40\%$ Glanzverlust aufweist.

3. Folie nach einem der Ansprüche 1 oder 2, dadurch gekennzeichnet, daß die Folie bei einer Siegelzeit von 0,1 s, einer Siegeltemperatur von 130 °C und einem Siegeldruck von 0,15 bar eine Siegelfestigkeit von $\geqslant 0,4$ N/15 mm aufweist.

4. Folie nach einem der Ansprüche 1 bis 3, dadurch gekennzeichnet, daß die Schichtstärke der Polyäthylenschicht(en) $\leqslant 2$ µm, bevorzugt $\leqslant 1$ µm, beträgt.

5. Folie nach einem der Ansprüche 1 bis 4, dadurch gekennzeichnet, daß die Polypropylen- und/oder Polyäthylenschicht(en) Additive enthalten.

6. Folie nach einem der Ansprüche 1 bis 5, dadurch gekennzeichnet, daß die Polypropylen- und/oder Polyäthylenschicht(en) Comonomere enthalten.

7. Verfahren zur Herstellung einer Folie nach einem der Ansprüche 1 bis 6, dadurch gekennzeichnet, daß man innerhalb eines an sich bekannten Heißlaminier-, Schmelzbeschichtungs- oder bevorzugt Coextrusionsverfahrens die heiße Polyäthylenschicht(en) sofort nach dem Verbinden mit der Polypropylenschicht abschreckt.

8. Verfahren nach Anspruch 7, dadurch gekennzeichnet, daß man die Polyäthylenschicht(en) mittels eines Gasstrahles und/oder eines Kühlbades abschreckt.

9. Verwendung einer Folie nach einem der Ansprüche 1 bis 6 als Verpackungsfolie für kratzende Güter oder als Einschlagfolie für Verpackungen.


**Claims**

1. Sealable, biaxially oriented polypropylene film having a layer of polyethylene applied to at least one surface, characterised in that the polyethylene layer has a scratch resistance of $\leqslant 50\%$ gloss reduction, relative to an initial gloss of 100 %, measured according to ASTM Standard Specification D 673-70 (1976), and a density of $\geqslant 0.94$ g/cm$^3$, preferably $\geqslant 0.95$ g/cm$^3$.

2. Film according to Claim 1, characterised in that the polyethylene layer or layers has or have a scratch resistance of $\leqslant 40\%$ gloss reduction.

3. Film according to any of Claims 1 or 2, characterised in that the film, given a sealing time of 0.1 s, a sealing temperature of 130 °C and a sealing pressure of 0.15 bar, has a seal strength of $\geqslant 0.4$ N/15 mm.

4. Film according to any of Claims 1 to 3, characterized in that the thickness of the polyethylene layer or layers is $\leqslant 2$ µm, preferably $\leqslant 1$ µm.

5. Film according to any of Claims 1 to 4, characterised in that the polypropylene layer and/or polyethylene layer or layers contain additives.

6. Film according to any of Claims 1 to 5, characterised in that the polypropylene layer and/or the polyethylene layer or layers contain comonomers.

4

7. Process for the manufacture of a film according to any of Claims 1 to 6, characterised in that, as part of a hot laminating process, melt coating process or, preferably, co-extrusion process known per se, the hot polyethylene layer or layers is or are chilled immediately after bonding to the polypropylene layer.

8. Process according to Claim 7, characterised in that the polyethylene layer or layers is or are chilled by means of a gas jet and/or a cooling bath.

9. Use of a film according to any of Claims 1 to 6 as a packaging film for abrasive goods or as a wrapping film for packagings.

**Revendications**

1. Feuille de polypropylène scellable, étirée biaxialement, recouverte d'une couche de polyéthylène sur au moins l'une de ses faces, caractérisée en ce que la couche de polyéthylène a une résistance au rayage ≤ 50 % de perte de brillant, par rapport à un brillant initial de 100 %, mesuré selon la norme ASTM D-673-70 (1976) et une masse volumique ≥ 0,94 g/cm$^3$, de préférence ≥ 0,95 g/cm$^3$.

2. Feuille selon la revendication 1, caractérisée en ce que la couche ou les couches de polyéthylène a (ont) une résistance au rayage ≤ 40 % de perte de brillant.

3. Feuille selon l'une des revendications 1 ou 2, caractérisée en ce que la feuille a une stabilité de scellement ≥ 0,4 N/15 mm pour un temps de scellement de 0,1 s, une température de scellement de 130 °C et une pression de scellement de 0,15.10$^5$ Pa.

4. Feuille selon l'une des revendications 1 à 3, caractérisée en ce que l'épaisseur de couche de la ou des couche(s) de polyéthylène est au plus égale à 2 μm, de préférence, au plus égale à 1 μm.

5. Feuille selon l'une des revendications 1 à 4, caractérisée en ce que la ou les couche(s) de polypropylène et/ou de polyéthylène contient (contiennent) des additifs.

6. Feuille selon l'une des revendications 1 à 5, caractérisée en ce que la ou les couche(s) de polypropylène et/ou de polyéthylène contient (contiennent) des comonomères.

7. Procédé de fabrication d'une feuille selon l'une quelconque des revendications 1 à 6, caractérisé en ce que, dans un procédé de stratification à chaud, de revêtement à l'état fondu ou de préférence de co-extrusion, connu en soi, on refroidit brusquement la couche ou les couches de polyéthylène chaude(s) immédiatement après l'assemblage avec la couche de polypropylène.

8. Procédé selon la revendication 7, caractérisé en ce qu'on refroidit la ou les couche(s) de polyéthylène au moyen d'un courant de gaz et/ou d'un bain de refroidissement.

9. Utilisation d'une feuille selon l'une des revendications 1 à 6 comme feuille d'emballage pour des articles capables de provoquer des rayures ou comme feuille d'enveloppement pour des emballages.